# FASCICULE DE BREVET EUROPEEN

(11) **EP 3 074 189 B1**
(45) Date de publication et mention de la délivrance du brevet: **11.04.2018**
(21) Numéro de dépôt: 14802923.4
(22) Date de dépôt: 27.11.2014
(51) Int. Cl.: B25J 9/00, B25J 9/06

(54) **MODULE ARTICULÉ MOTORISÉ, ARTICULATION COMPRENANT PLUSIEURS MODULES ET EXOSQUELETTE COMPRENANT PLUSIEURS ARTICULATIONS**
MOTORGETRIEBENES BEWEGLICHES MODUL, GELENK MIT MEHREREN MODULEN UND EXOSKELETT MIT MEHREREN GELENKEN
MOTOR-DRIVEN ARTICULATED MODULE, ARTICULATION INCLUDING SEVERAL MODULES, AND EXOSKELETON INCLUDING SEVERAL ARTICULATIONS

(30) Priorité: 27.11.2013 FR 1361672
(43) Date de publication de la demande: 05.10.2016
(73) Titulaire: Assistive Robotic Technologies, 78700 Conflans Ste Honorine (FR)
(72) Inventeur: NAMOUN, Fayçal, F-92400 Courbevoie (FR); SELLAOUTI, Ramzi, F-Clichy 92110 (FR); PISTIAUX, Laurent, F-95210 Saint-Gratien (FR)
(74) Mandataire: Collet, Alain
(86) Numéro de dépôt international: PCT/EP2014/075841
(87) Numéro de publication internationale: WO 2015/078981

(56) Documents cités:
- JP-A- 2010 075 548
- US-A- 3 580 099
- US-A- 4 712 969
- US-A- 4 848 179
- US-A1- 2011 313 331

## Description

L'invention concerne un module articulé motorisé, un système comprenant plusieurs modules et un et exosquelette comprenant plusieurs articulations.

Le document US-A-4 712 969 montre un système comprenant plusieurs modules articulés motorisés, chaque module comprenant deux éléments mobiles l'un par rapport à l'autre, un premier vérin linéaire permettant la motorisation du module et comportant un corps et une tige apte à se déplacer en translation par rapport au corps selon un axe, et deux biellettes associées au premier vérin, dont l'une est reliée par une extrémité au premier des deux éléments au moyen d'une liaison à au moins un degré de liberté en rotation et à la tige du premier vérin au moyen d'une liaison à un degré de liberté en rotation. De tels modules trouvent leur utilité dans un robot de type trompe d'éléphant ou serpent. Ce type de robot est par exemple mis en oeuvre pour reproduire les mouvements d'une colonne vertébrale.

La colonne vertébrale humaine est la partie du corps humain qui dispose du plus grand nombre d'articulations. Chacune de ces articulations dispose de cinq à six degrés de liberté. De nombreuses tentatives ont été réalisées dans des robots humanoïdes afin de se rapprocher au mieux des fonctionnalités humaines.

De façon classique, on a tenté de reproduire dans des robots plusieurs vertèbres d'une colonne vertébrale humaine en disposant entre chaque vertèbre des articulations motorisées. Pour se rapprocher d'une colonne vertébrale humaine, il est nécessaire de prévoir un grand nombre de vertèbres articulées.

De façon classique les vertèbres des robots sont formées de plaques et des vérins perpendiculaires aux plaques servent d'articulations entre les vertèbres. L'amplitude de déplacements des vérins contribue à la mobilité de la colonne vertébrale. Cette amplitude est limitée par la distance séparant deux plaques voisines. Dans un espace donné, l'augmentation du nombre de vertèbres se fait au détriment de l'amplitude de déplacement relatif des vertèbres entre elles.

L'invention vise à améliorer la mobilité des vertèbres entre elles. Autrement dit, pour une distance donnée séparant deux vertèbres, l'invention cherche à augmenter l'amplitude des déplacements relatifs de deux vertèbres voisines.

A cet effet, l'invention a pour objet un module articulé motorisé comprenant deux éléments mobiles l'un par rapport à l'autre, comprenant
- un premier vérin linéaire permettant la motorisation du module et comportant un corps et une tige apte à se déplacer en translation par rapport au corps selon un axe, le corps du premier vérin étant relié à chacun des deux éléments au moyen d'une liaison à au moins un degré de liberté en rotation,
- deux biellettes associées au premier vérin, chacune reliée à une première de leurs extrémités à la tige du premier vérin au moyen d'une liaison à un degré de liberté en rotation, une seconde extrémité d'une première des deux biellettes étant reliée au premier des deux éléments au moyen d'une liaison à au moins un degré de liberté en rotation, une seconde extrémité d'une seconde des deux biellettes étant reliée au second des deux éléments au moyen d'une liaison à au moins un degré de liberté en rotation.

Le module articulé motorisé selon l'invention peut être mis en oeuvre dans tout type de robot. Parmi les applications envisagées on peut citer bien entendu une colonne vertébrale dans laquelle les deux éléments mobiles de l'invention forment deux vertèbres voisines, les modules étant assemblés en série. La colonne vertébrale est à entendre au sens large. On peut retrouver la mise en série de modules pour réaliser un robot de type poisson permettant de se déplacer dans l'eau.

Une autre application des modules mis en série peut être envisagée dans un exosquelette et notamment pour les articulations des membres comme par exemple la hanche ou le genou de l'exosquelette.

Pour la réalisation d'un robot dans lequel des modules selon l'invention sont mis en série, l'invention a également pour objet une articulation comprenant plusieurs modules articulés selon l'invention, l'un desdits éléments mobiles desdits modules étant commun à deux modules adjacents.

L'invention sera mieux comprise et d'autres avantages apparaîtront à la lecture de la description détaillée d'un mode de réalisation donné à titre d'exemple, description illustrée par le dessin joint dans lequel :
la figure 1 représente en coupe un module articulé motorisé selon l'invention ;
la figure 2 représente en perspective le module selon l'invention ;
la figure 3 représente en vue éclatée le module selon l'invention ;
la figure 4 représente un exosquelette mettant en oeuvre plusieurs module selon l'invention ;
la figure 5 représente une articulation de la hanche de l'exosquelette ;
la figure 6 représente une articulation du genou de l'exosquelette.

Par souci de clarté, les mêmes éléments porteront les mêmes repères dans les différentes figures.

L'invention permet de motoriser l'articulation de deux éléments rigides appelés vertèbres par la suite. Les deux vertèbres peuvent se déplacer l'une par rapport à l'autre selon un ou deux degrés de libertés en rotation. Chacune des rotations est motorisée. Le terme vertèbre est utilisé en rapport à une vertèbre humaine. En robotique, il est classique de modéliser la mobilité de deux vertèbres par une liaison à deux rotations de faible amplitude, de l'ordre de quelques degrés. L'invention, présente déjà un intérêt pour deux vertèbres ne possédant qu'un seul degré de liberté en rotation. L'invention peut aussi être mise en oeuvre pour deux vertèbres mobiles entre elles selon deux degrés de liberté en rotation, les axes des deux rotations étant sécants. Les axes des deux rotations peuvent être perpendiculaires. Il est également possible d'orienter les deux axes de rotation de façon à former entre les axes un angle inférieur à 90°, par exemple autour de 60°. Ceci permet de privilégier certains mouvements des vertèbres entre elles.

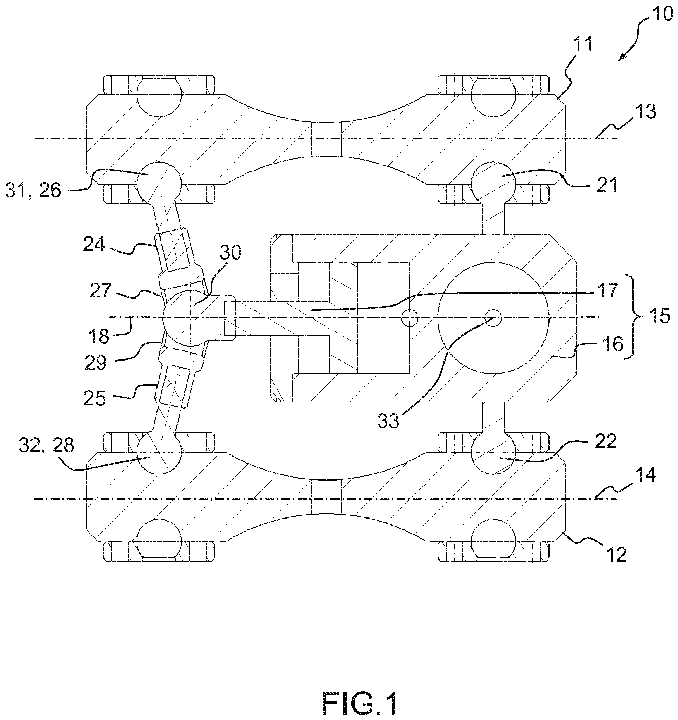

La figure 1 représente en coupe un module 10 articulé, motorisé et comprenant deux vertèbres 11 et 12 formées chacune par une pièce mécanique rigide est que l'on suppose indéformable par rapport aux mouvements de l'articulation. La vertèbre 11 s'étend principalement selon un plan 13 et la vertèbre 12 s'étend principalement selon un plan 14. Les deux plans 12 et 14 sont perpendiculaires au plan de la figure 1.

Le module 10 représenté sur la figure 1 possède deux degrés de liberté en rotation. Un premier degré de liberté s'articule autour d'un axe perpendiculaire au plan de la figure 1. Ce premier degré de liberté est motorisé au moyen d'un vérin linéaire 15 comprenant un corps 16 et une tige 17. La tige 17 est apte à se déplacer en translation par rapport au corps 16 selon un axe 18 contenu dans le plan de la figure 1. Le vérin 15 peut être motorisé par toute forme d'énergie. Il peut s'agir d'un vérin hydraulique, pneumatique ou électrique. Le corps 16 du vérin 15 est relié à la vertèbre 11 au moyen d'une liaison à deux degrés de liberté en rotation 21 et à la vertèbre 12 au moyen d'une liaison à au moins deux degrés de liberté en rotation 22. Les deux liaisons 21 et 22 sont par exemple des liaisons de type rotule. Un troisième degré de liberté en rotation présent dans la liaison rotule n'est pas utile fonctionnellement mais permet de réduire l'hyperstaticité de la liaison globale entre les deux vertèbres 11 et 12. De plus une liaison rotule est plus simple à réaliser qu'une liaison à deux degrés de liberté en rotation.

Dans le cas d'un module où les vertèbres sont mobiles entre elles selon un seul degré de liberté en rotation, les liaisons reliant le corps 16 à chacune des deux vertèbres 11 et 12 peuvent ne posséder qu'un seul degré de liberté en rotation. Il s'agit alors de liaisons pivots dont les axes respectifs sont tous deux perpendiculaires au plan de la figure 1 et donc parallèle à l'axe de rotation des deux vertèbres entre elles.

Le module 10 représenté sur la figure 1 comprend deux biellettes 24 et 25 associées au vérin 15. Les biellettes 24 et 25 s'étendent chacune de façon longiligne entre deux extrémités, 26 et 27 pour la biellette 24 et 28 et 29 pour la biellette 25. Les biellettes 24 et 25 ont avantageusement la même longueur entre leurs extrémités.

Les biellettes 24 et 25 sont reliées par leurs extrémités 27 et 29 à la tige 17 du vérin 15 chacune au moyen d'une liaison à un degré de liberté en rotation. Avantageusement, les deux biellettes 24 et 25 sont articulées par rapport à la tige 17 du vérin au moyen de la même liaison pivot, ce qui facilite la réalisation de cette liaison. Il s'agit d'une liaison pivot 30 dont l'axe est perpendiculaire au plan de la figure 1 et donc parallèle à l'axe de rotation de la liaison motorisé par le vérin 15. Alternativement, il est possible de mettre en oeuvre deux liaisons pivots distinctes chacune entre la tige 17 et l'une des biellettes 24 et 25. Les deux liaisons pivots ont alors toutes deux des axes de rotation parallèles à l'axe de rotation de la liaison motorisé par le vérin 15.

La biellette 24 est reliée en son extrémité 26 à la vertèbre 11 au moyen d'une liaison à au moins deux degrés de liberté en rotation 31. De même, la biellette 25 est reliée en son extrémité 28 à la vertèbre 12 au moyen d'une liaison à au moins deux degrés de liberté en rotation 32. Comme précédemment, les deux liaisons 31 et 32 peuvent être des liaisons de type rotule.

Comme précédemment, dans le cas d'un module où les vertèbres sont mobiles entre elle selon un seul degré de liberté en rotation, les liaisons reliant biellettes 24 et 25 à chacune des deux vertèbres 11 et 12 peuvent ne posséder qu'un seul degré de liberté en rotation. Il s'agit alors de liaisons pivots dont les axes respectifs sont tous deux perpendiculaires au plan de la figure 1 et donc parallèles à l'axe de rotation des deux vertèbres entre elles. Néanmoins, même dans ce cas, les liaisons entre les biellettes et les vertèbres peuvent être de type cardan, c'est-à-dire à deux degrés de liberté afin d'éviter un degré d'hyperstatisme dans le module, qui apparaitrait dans le parallélisme nécessaire entre les axes de liaisons pivots reliant le corps du vérin aux vertèbres et les axes des liaisons pivots reliant les biellettes aux vertèbres.

Lorsque le vérin 15 est actionné, la tige 17 se déplace en translation par rapport au corps 16. Les deux extrémités 27 et 29 des deux biellettes 24 et 25 se déplacent sur l'axe 18 et la distance séparant les vertèbres 11 et 12 évolue, distance mesurée au niveau des liaisons 31 et 32 avec les biellettes 24 et 25. Lors de ce mouvement du vérin 15, son corps 16 pivote par rapport à chacune des vertèbres 11 et 12 au niveau de chacune des liaisons 21 et 22.

Lors du mouvement du vérin 15, les deux vertèbres 11 et 12 pivotent l'une par rapport à l'autre autour d'un axe 33 situé à mi distance des liaisons 21 et 22.

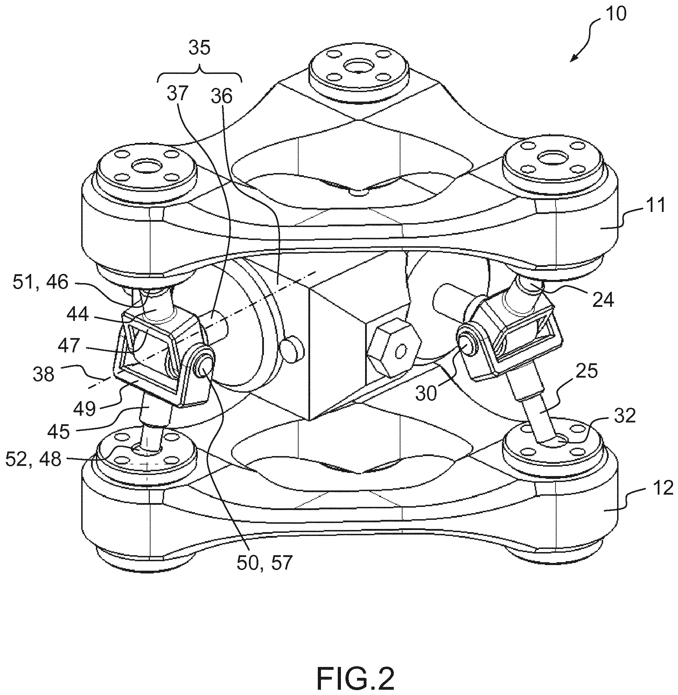

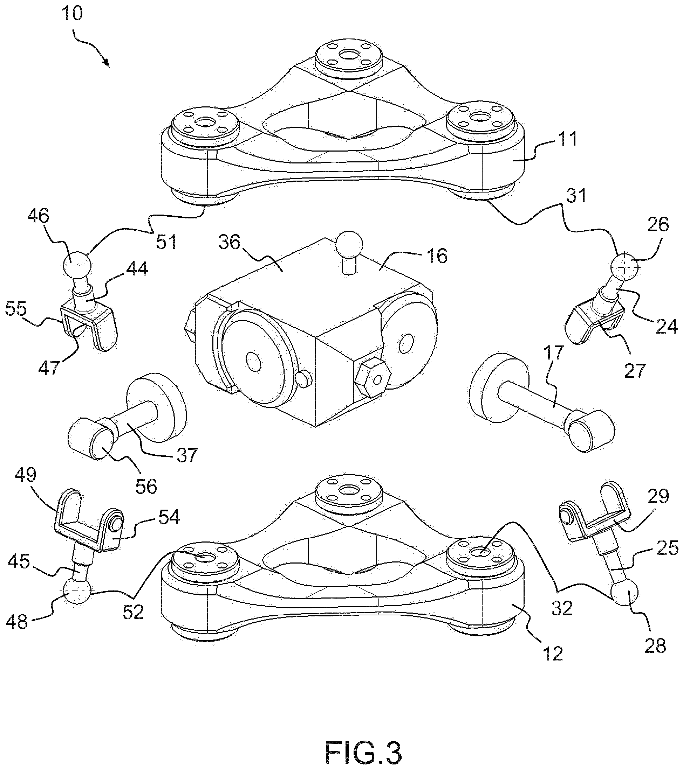

La figure 2 représente en perspective le module 10 de la figure 1 et la figure 3 représente ce même module en perspective éclatée. Ces deux figures permettent de montrer la présence de deux vérins dont les axes de translation sont distincts. On retrouve les deux vertèbres 11 et 12, le vérin 15 et les deux biellettes 24 et 25 qui lui sont associées. Le module 10 comprend en outre un second vérin linéaire 35 comportant un corps 36 et une tige 37 apte à se déplacer en translation par rapport au corps 36 selon un axe 38 distinct de l'axe 18. Le corps 36 est solidaire du corps 16. Les deux corps 16 et 36 peuvent appartenir à une même pièce mécanique. Les corps 16 et 36 sont reliés à chacune des deux vertèbres 11 et 12 au moyen d'une liaison à deux degrés de liberté en rotation, respectivement la liaison 21 pour la vertèbre 11 et la liaison 22 pour la vertèbre 12.

Le module 10 comprend aussi deux biellettes 44 et 45 associées au vérin 35. Comme pour les biellettes 24 et 25, les biellettes 44 et 45 s'étendent chacune de façon longiligne entre deux extrémités, 46 et 47 pour la biellette 44 et deux extrémités 48 et 49 pour la biellette 45. Les biellettes 44 et 45 ont avantageusement la même longueur entre leurs extrémités. Le module 10 peut comprendre des couples de biellettes différents, le premier couple étant formé des biellettes 24 et 25 et le second couple des biellettes 44 et 45. Cette différence permet de moduler différemment l'amplitude des rotations motorisées par chacun des vérins 15 et 35. Alternativement, les quatre biellettes 24, 25, 44 et 45 peuvent avoir la même longueur. Outre la symétrie des deux rotations, cette alternative permet de simplifier la fabrication du module 10 en réduisant le nombre de composants différents.

Les biellettes 44 et 45 sont reliées par leurs extrémités 47 et 49 à la tige 37 du vérin 35 au moyen d'une liaison à un degré de liberté en rotation. Avantageusement, les deux biellettes 44 et 45 sont articulées par rapport à la tige 37 du vérin 35 au moyen de la même liaison pivot, ce qui facilite la réalisation de cette liaison. Il s'agit d'une liaison pivot 50 dont l'axe est parallèle à l'axe de rotation de la liaison motorisé par le vérin 35.

Pour réaliser une seule liaison 50 pour relier trois pièces mécaniques, en l'occurrence les deux biellettes 44 et 45 ainsi que la tige 37, les deux biellettes 44 et 45 peuvent comporter chacune une fourche, respectivement 54 et 55. La tige 37 comprend un doigt 56. L'assemblage de la liaison pivot 50 est visible sur la figure 2. Les fourches 54 et 55 sont imbriquées l'une dans l'autre et le doigt 56 est disposé entre les fourches 54 et 55. Dans cette disposition, un axe 57 traverse les trois pièces mécaniques au niveau des fourches 54 et 55 et du doigt 56. La liaison pivot 50 est assurée en laissant un jeu fonctionnel entre le doigt et au moins deux des pièces mécaniques qu'il traverse. La présence des fourches permet de bien faire transiter les efforts dans la tige 37 par son axe 38 et dans chacune des biellettes 44 et 45 par leur direction principale respective. Alternativement, il est possible de simplifier la conception en se passant de fourche et en disposant les extrémités 47 et 49 et le doigt 56 cote à cote et toujours en traversant ces trois éléments par l'axe 57. Cette simplification de la liaison pivot 50 se fait au détriment de la symétrie des efforts dans le module 10. La liaison pivot 30 peut être réalisée de façon identique à la liaison pivot 50.

Comme pour les liaisons entre la tige 17 et les deux biellettes 24 et 25, il est possible de mettre en oeuvre deux liaisons pivots distinctes chacune entre la tige 37 et l'une des biellettes 44 et 45. Les deux liaisons pivots ont alors toutes deux des axes de rotation parallèles à l'axe de rotation de la liaison motorisé par le vérin 35.

La biellette 44 est reliée en son extrémité 46 à la vertèbre 11 au moyen d'une liaison à deux degrés de liberté en rotation 51. De même, biellette 45 est reliée en son extrémité 48 à la vertèbre 12 au moyen d'une liaison à deux degrés de liberté en rotation 52. Comme précédemment, les deux liaisons 51 et 52 peuvent être des liaisons de type rotule.

Comme pour le vérin 15, lorsque le vérin 35 est actionné, la distance séparant les vertèbres 11 et 12 au niveau des liaisons 51 et 52 évolue. Les deux rotations des vertèbres l'une par rapport à l'autres sont complètement indépendantes, chaque vérin 15 et 35 permettant de motoriser l'une des rotations.

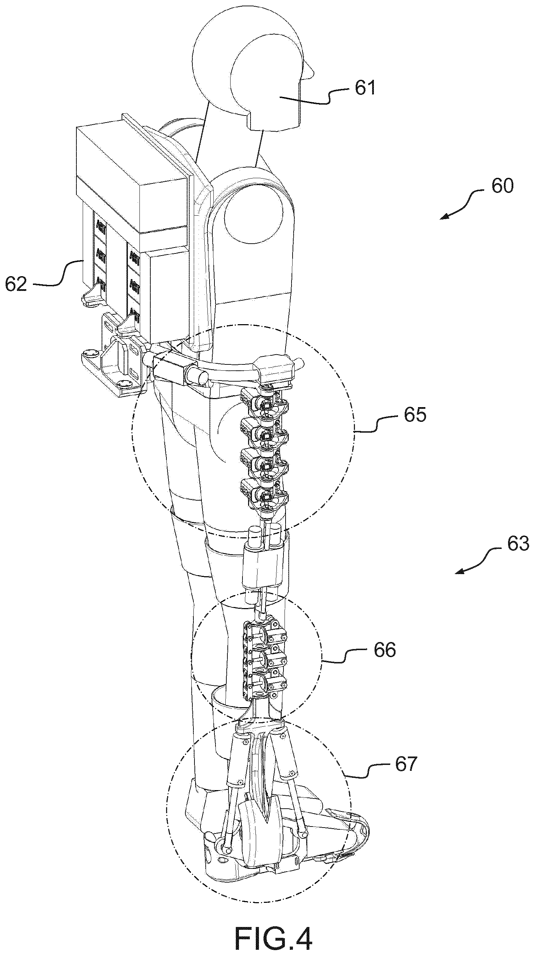

La figure 4 représente un exosquelette 60 mettant en oeuvre plusieurs modules selon l'invention. L'exosquelette 60 permet par exemple à une personne 61 handicapée des membres inférieurs de se déplacer en marchant. L'exosquelette 60 permet d'accompagner le déplacement des hanches, des genoux et des chevilles de la personne 61. A cet effet l'exosquelette 60 comprend une partie haute 62 sanglée sur le buste de la personne 61 et une partie basse 63 possédant plusieurs articulations motorisées destinées à pallier les déficiences moteurs de la personne handicapée 61. Les articulations motorisées sont disposées dans le voisinage latéral des membres inférieurs de la personne 61.

L'exosquelette 60 comprend de l'amont vers l'aval, c'est-à-dire en s'éloignant de la partie haute 62 en direction des pieds de la personne 61, deux articulations 65 accompagnant chacune les mouvements d'une hanche de la personne 61, deux articulations 66 accompagnant chacune les mouvements d'un genou de la personne 61 et deux articulations 67 accompagnant chacune les mouvements d'une cheville de la personne 61. Par commodité, l'articulation 65 sera appelée par la suite hanche de l'exosquelette 60 et l'articulation 66 : genou de l'exosquelette 60.

L'exosquelette 60 est fixé à chacun des pieds de la personne 61 en aval de chacune des articulations 67. Il est tout à fait possible d'équiper une personne 61 partiellement ou totalement amputée des membres inférieurs.

Chacune des hanches 65 comprend un système formé de quatre modules et chacun des genoux 66 comprend un système formé de trois modules. Dans chaque système, une vertèbre est commune à deux modules adjacents. Le détail de chaque système sera décrit à l'aide des figures suivantes. Il est bien entendu que le nombre de module par système n'est donné qu'à titre d'exemple. Le nombre de module est principalement défini en fonction du débattement angulaire maximum que l'on souhaite obtenir globalement pour l'articulation concernée à partir du débattement de chaque module.

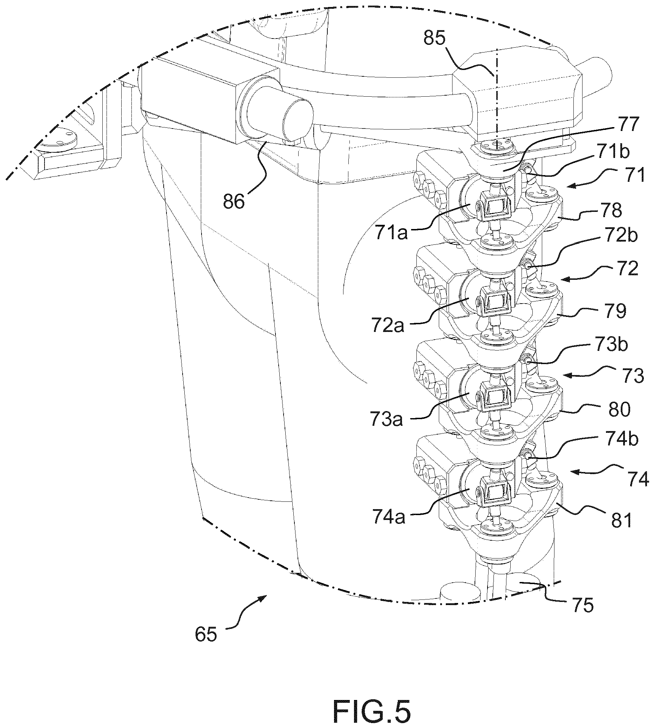

La figure 5 représente plus en détail une articulation 65 formant la hanche de l'exosquelette 60. L'articulation 65 comprend quatre modules 71, 72, 73 et 74 tous semblables au module 10 décrit précédemment. Les quatre modules sont connectés en série entre la partie haute 62 et une pièce intermédiaire 75 de l'exosquelette 60 disposée en aval de la hanche 65 et en amont du genou 66. Le module 71 possède une vertèbre amont 77 solidaire de la partie haute 62 et une vertèbre avale 78 formant la vertèbre amont du module 72. Le module 72 possède une vertèbre avale 79 formant la vertèbre amont du module 73. Le module 73 possède une vertèbre avale 80 formant la vertèbre amont du module 74 qui possède une vertèbre avale 81 solidaire de la pièce intermédiaire 75 destinée à être positionnée la long d'une des cuisses de la personne 61. Il est possible de prévoir une ou plusieurs sangles permettant d'attacher la pièce intermédiaire 75 à la cuisse concernée.

Chacun des modules 71, 72, 73 et 74 possède deux vérins appelés de la référence du module concerné suivi d'une lettre a ou b. Dans une position particulière de l'exosquelette 60, par exemple lorsque la personne 61 est immobile et debout, ses jambes étant verticales, les axes des vérins 71a à 74a sont tous parallèles et les axes des vérins 71b à 74b sont également tous parallèles. Cette position peut être obtenue lorsque les plans dans lesquels s'étendent les différentes vertèbres sont tous parallèles. Pour illustrer ce parallélisme, il peut être obtenu lorsque les plans 13 et 14, visibles sur la figure 1, sont parallèles et ceci pour tous les modules d'une même articulation. Le mouvement des vérins 71a à 74a contribuent tous à une même rotation globale de la hanche 65, dans l'exemple représenté une rotation dans un plan frontal de l'exosquelette 60. De même, le mouvement des vérins 71b à 74b contribuent tous à une même rotation globale de la hanche 65, une rotation dans un plan sagittal de l'exosquelette 60. Même si chacun des modules 71 à 74 n'a qu'un débattement modéré, la mise en série de plusieurs modules dans une configuration où les axes des vérins des différents modules sont parallèles par groupes permet de conserver des rotation sans torsion de l'articulation.

Alternativement, il est possible de disposer les vérins de telle façon à ne pas obtenir un tel parallélisme afin de générer une torsion de l'articulation 65.

Avantageusement, l'articulation 65 comprend en outre des moyens de pilotage communs aux premiers vérins 71a à 74a et aux seconds vérins 71b à 74b des différents modules 71 à 74.

Il est possible d'animer la hanche d'une troisième rotation dans un plan horizontal de l'exosquelette 60. A cet effet, la vertèbre amont 77 du module 71 peut être reliée à la partie haute 62 par une liaison pivot d'axe vertical 85. Un vérin 86 peut motoriser cette liaison pivot.

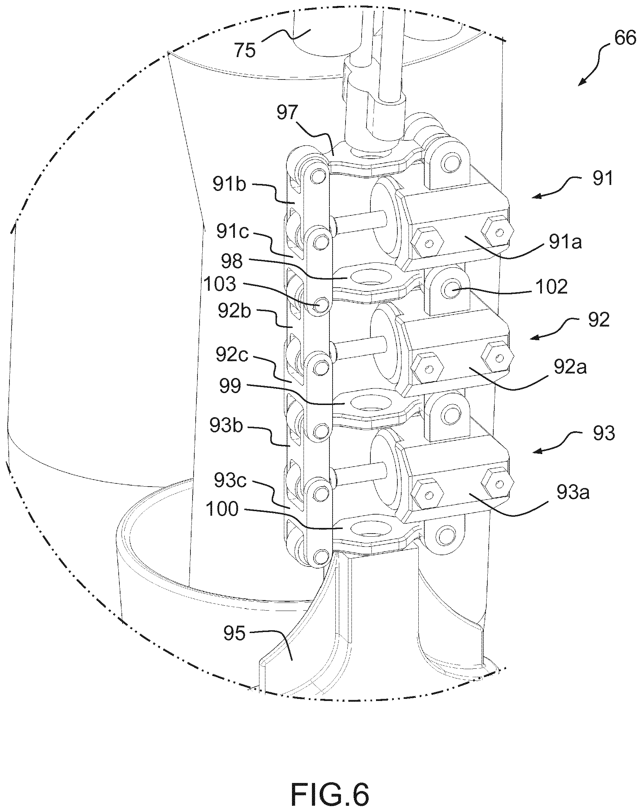

La figure 6 représente plus en détail le genou 66 de l'exosquelette 60. Le genou 66 comprend trois modules 91, 92 et 93, tous semblables. Les trois modules 91, 92 et 93 ne comprennent qu'un seul vérin chacun et donc seulement deux biellettes par module, les deux biellettes étant associées au vérin du module considéré.

Les trois modules 91, 92 et 93 sont connectés en série entre la pièce intermédiaire 75 et une autre pièce intermédiaire 95 de l'exosquelette 60 disposée en aval genou 66 et en amont de la cheville 67. La pièce intermédiaire 95 est destinée à être positionnée le long d'un des mollets de la personne 61. Il est possible de prévoir une ou plusieurs sangles permettant d'attacher la pièce intermédiaire 75 au mollet concerné.

Le module 91 possède une vertèbre amont 97 solidaire de la pièce intermédiaire 75 et une vertèbre avale 98 formant la vertèbre amont du module 92. Le module 92 possède une vertèbre avale 99 formant la vertèbre amont du module 93 qui possède une vertèbre avale 100 solidaire de la pièce intermédiaire 95.

Chacun des modules 91, 92 et 93 possède un vérin respectivement 91a, 92a et 93a. Comme pour la hanche, 65, dans une position particulière du genou 66, les axes des vérins 91a, 92a et 93a sont tous parallèles. Les mouvements des vérins 91a, 92a et 93a contribuent tous à une même rotation globale du genou 66, dans l'exemple représenté une rotation dans un plan sagittal de l'exosquelette 60. Même si chacun des modules 91, 92 et 93 n'a qu'un débattement modéré, la mise en série de plusieurs modules dans une configuration où les axes des vérins des différents modules sont parallèles permet de conserver une rotation sans torsion de l'articulation.

Alternativement, il est possible de disposer les vérins de telle façon à ne pas obtenir un tel parallélisme afin de générer une torsion de l'articulation 66.

Le corps de chaque vérin 91a, 92a et 93a est relié à une vertèbre amont par une liaison pivot et par une autre liaison pivot à une vertèbre avale. Avantageusement, une même liaison pivot commune relie une vertèbre commune à deux modules adjacents et les corps des vérins des deux modules adjacents. Par exemple, une liaison pivot 102 relie la vertèbre 98, le corps du vérin 91a et le corps du vérin 92a. La réalisation de la liaison pivot commune 102 peut être semblable à la réalisation des liaisons 30 et 50.

Dans chacun des modules 91, 92 et 93, on retrouve, comme pour le module 10, deux biellettes associées à chaque vérin 91a, 92a et 93a. Les biellettes portent, sur la figure 6, le repère du module suivi d'une des deux lettres b et c pour chacune des deux biellettes.

Avantageusement, une même liaison pivot commune relie une vertèbre commune à deux modules adjacents et les biellettes correspondantes. Par exemple, une même liaison pivot 103 relie la vertèbre 98, et les biellettes 91c et 92b.

Avantageusement, l'articulation 66 comprend en outre des moyens de pilotage communs aux premiers vérins 91a à 93a des différents modules 91 à 93.

Ces liaisons pivots communes permettent de simplifier l'articulation 66 et de réduire ses dimensions, notamment sa hauteur, définie lorsque l'exosquelette 60 est debout.

## Revendications

1. Module articulé motorisé (10 ; 71 à 74 ; 91 à 93) comprenant deux éléments mobiles (11, 12 ; 77 à 81 ; 97 à 100), l'un par rapport à l'autre, comprenant :
• un premier vérin linéaire (15 ; 71a à 74a ; 91a à 93a) permettant la motorisation du module et comportant un corps (16) et une tige (17) apte à se déplacer en translation par rapport au corps (16) selon un axe (18), le corps (16) du premier vérin étant relié à chacun des deux éléments au moyen d'une liaison (21, 22 ; 102) à au moins un degré de liberté en rotation,
• deux biellettes (24, 25 ; 91b, 91c, 92b, 92c, 93b, 93c) associées au premier vérin, chacune reliée à une première (27, 29) de leurs extrémités à la tige (17) du premier vérin au moyen d'une liaison (30) à un degré de liberté en rotation, une seconde extrémité (26) d'une première (24) des deux biellettes étant reliée au premier (11 ; 98) des deux éléments au moyen d'une liaison (31 ; 103) à au moins un degré de liberté en rotation, une seconde (28) extrémité d'une seconde (25) des deux biellettes étant reliée au second (12) des deux éléments au moyen d'une liaison (32) à au moins un degré de liberté en rotation.

2. Module articulé selon la revendication 1, **caractérisé en ce qu'**il comprend en outre :
• un second vérin linéaire (35) permettant la motorisation du module et comportant un corps (36) et une tige (37) apte à se déplacer en translation par rapport au corps selon un axe (38), l'axe du second vérin (35) étant distinct de l'axe (18) du premier vérin (15), le corps (36) du second vérin (35) étant solidaire du corps (16) du premier vérin (15), les corps (16, 36) des deux vérins (15, 35) étant reliés à chacun des deux éléments (11, 12) au moyen d'une liaison (21, 22) à au moins deux degrés de liberté en rotation,
• deux biellettes (44, 45) associées au second vérin (35), chacune reliée à une première (47, 49) de leurs extrémités à la tige (37) du second vérin (35) au moyen d'une liaison (50) à un degré de liberté en rotation, une seconde extrémité (46) d'une première (44) des deux biellettes étant reliée au premier (11) des deux éléments au moyen d'une liaison (51) à deux degrés de liberté en rotation, une seconde extrémité (48) d'une seconde (45) des deux biellettes étant reliée au second (12) des deux éléments au moyen d'une liaison (52) à deux degrés de liberté en rotation,
**en ce que** la seconde extrémité (26) de la première biellette (24) associée au premier vérin (15) est reliée au premier (11) des deux éléments au moyen d'une liaison (31) à au moins deux degrés de liberté en rotation,
et **en ce que** la seconde extrémité (28) de la seconde biellette (25) associée au premier vérin (15) est reliée au second (12) des deux éléments au moyen d'une liaison (32) à au moins deux degrés de liberté en rotation.

3. Module articulé selon l'une des revendications précédentes, **caractérisé en ce que** les biellettes (24, 25 ; 91b, 91c, 92b, 92c, 93b, 93c) sont articulées par rapport à la tige (17, 37) de leur vérin respectif (15, 35 ; 71a à 74a ; 91a à 93a) au moyen d'une même liaison pivot (30, 50).

4. Articulation (65, 66) comprenant plusieurs modules articulés (71 à 74 ; 91 à 93) selon l'une des revendications précédentes, l'un desdits éléments mobiles (78, 79, 80 ; 98, 99) desdits modules étant commun à deux modules adjacents.

5. Articulation selon la revendication 4, **caractérisée en ce que** dans une position particulière de l'articulation (65, 66), les axes (18) des premiers vérins (71a à 74a ; 91a à 93a) de chacun des modules (71 à 74 ; 91 à 93) sont parallèles.

6. Articulation selon la revendication 5, en tant que revendication dépendante de la revendication 2, **caractérisée en ce que** dans une position particulière de l'articulation (65), les axes des seconds vérins (71b à 74b) de chacun des modules (71 à 74) sont parallèles.

7. Articulation selon la revendication 5, **caractérisée en ce que** les modules (91 à 93) ne possèdent chacun qu'un seul vérin (91a à 93a), **en ce que** pour chaque module (91 à 93), le corps du vérin (91a à 93a) est relié à chacun des deux éléments (97, 100) au moyen d'une liaison pivot (102) et **en ce qu'**une même liaison pivot (102) commune relie un élément mobile commun (98) à deux modules adjacents (91, 92) et les corps des vérins (91a, 92a) des deux modules adjacents (91, 92).

8. Articulation selon l'une quelconque des revendications 5 ou 7, **caractérisée en ce que** les modules (91 à 93) ne possèdent chacun qu'un seul vérin (91a à 93a), **en ce que** dans chaque module (91 à 93) les biellettes (91b à 93b, 91c à 93c) sont reliées aux éléments (97 à 100) correspondants au moyen d'une liaison pivot (103) et **en ce qu'**une même liaison pivot (103) commune relie un élément mobile (98) commun à deux modules adjacents (91, 92) et les biellettes (91c, 92b) correspondantes.

9. Articulation (65, 66) selon l'une quelconque des revendications 4 à 8, **caractérisée en ce qu'**elle comprend en outre des moyens de pilotage communs aux premiers vérins (71a à 74a; 91a à 93a) des différents modules (71 à 74 ; 91 à 93).

10. Articulation (65) selon l'une quelconque des revendications 4 à 9, en tant que revendication dépendante de la revendication 2, **caractérisée en ce qu'**elle comprend en outre des moyens de pilotage communs aux seconds vérins (71b à 74b) des différents modules (71 à 74).

11. Exosquelette comprenant deux articulations (65) selon l'une des revendications 4 à 10 en tant que revendication dépendante de la revendication 2 destinées à accompagner chacune les mouvements d'une hanche d'une personne (61) et deux articulations (66) selon l'une des revendications 4 à 10 destinées à accompagner chacune les mouvements d'un genou de la personne (61).

## Patentansprüche

1. Motorgetriebenes, artikuliertes Modul (10; 71 bis 74; 91 bis 93), beinhaltend zwei zueinander bewegliche Elemente (11, 12; 77 bis 81; 97 bis 100), Folgendes beinhaltend:
• einen ersten linearen Druckzylinder (15; 71a bis 74a; 91a bis 93a), welcher den Antrieb des Moduls ermöglicht und einen Körper (16) und einen Stab (17) umfasst, in der Lage, sich in Verschiebung zum Körper (16) entlang einer Achse (18) zu bewegen, wobei der Körper (16) des ersten Druckzylinders mit jedem der beiden Elemente mit Hilfe einer Verbindung (21, 22; 102) mit mindestens einem Grad an Rotationsfreiheit verbunden ist,
• zwei Zugstangen (24, 25; 91b, 91c, 92b, 92c, 93b, 93c), verknüpft mit dem ersten Druckzylinder, wobei jede an einem ersten (27, 29) ihrer Enden mit der Stange (17) des ersten Druckzylinders mit Hilfe einer Verbindung (30) mit einem Grad an Rotationsfreiheit verbunden ist, wobei ein zweites Ende (26) einer ersten (24) der beiden Zugstangen mit dem ersten (11; 98) der beiden Elemente mit Hilfe einer Verbindung (31; 103) mit mindestens einem Grad an Rotationsfreiheit verbunden ist, wobei ein zweites (28) Ende einer zweiten (25) der beiden Zugstangen mit dem zweiten (12) der beiden Elemente mit Hilfe einer Verbindung (32) mit mindestens einem Grad an Rotationsfreiheit verbunden ist.

2. Artikuliertes Modul nach Anspruch 1, **dadurch gekennzeichnet, dass** es zudem Folgendes beinhaltet:
• einen zweiten linearen Druckzylinder (35), welcher den Antrieb des Moduls ermöglicht und einen Körper (36) und einen Stab (37) umfasst, in der Lage, sich in Verschiebung zum Körper entlang einer Achse (38) zu bewegen, wobei die Achse des zweiten Druckzylinders (35) sich von der Achse (18) des ersten Druckzylinders (15) unterscheidet, wobei der Körper (36) des zweiten Druckzylinders (35) fest mit dem Körper (16) des ersten Druckzylinders (15) verbunden ist, wobei die Körper (16, 36) der beiden Druckzylinder (15, 35) mit jedem der beiden Elemente (11, 12) mit Hilfe einer Verbindung (21, 22) mit mindestens zwei Grad an Rotationsfreiheit verbunden sind,
• zwei Zugstangen (44, 45), verknüpft mit dem zweiten Druckzylinder (35), wobei jede an einem ersten (47, 49) ihrer Enden mit der Stange (37) des zweiten Druckzylinders (35) mit Hilfe einer Verbindung (50) mit einem Grad an Rotationsfreiheit verbunden ist, wobei ein zweites Ende (46) einer ersten (44) der beiden Zugstangen mit dem ersten (11) der beiden Elemente mit Hilfe einer Verbindung (51) mit mindestens zwei Grad an Rotationsfreiheit verbunden ist, wobei ein zweites Ende (48) einer zweiten (45) der beiden Zugstangen mit dem zweiten (12) der beiden Elemente mit Hilfe einer Verbindung (52) mit zwei Grad an Rotationsfreiheit verbunden ist,
dadurch, dass das zweite Ende (26) der ersten Zugstange (24), verknüpft mit dem ersten Druckzylinder (15), mit dem ersten (11) der beiden Elemente mit Hilfe einer Verbindung (31) mit mindestens zwei Grad an Rotationsfreiheit verbunden ist,
und dadurch, dass das zweite Ende (28) der zweiten Zugstange (25), verknüpft mit dem ersten Druckzylinder (15), mit dem zweiten (12) der beiden Elemente mit Hilfe einer Verbindung (32) mit mindestens zwei Grad an Rotationsfreiheit verbunden ist.

3. Artikuliertes Modul nach einem der vorhergehenden Ansprüche, **dadurch gekennzeichnet, dass** die Zugstangen (24, 25; 91b, 91c, 92b, 92c, 93b, 93c) in Bezug auf die Stange (17, 37) ihres jeweiligen Druckzylinders (15, 35; 71a bis 74a; 91a bis 93a) mit Hilfe einer selben Schwenkverbindung (30, 50) artikuliert sind.

4. Gelenk (65, 66), beinhaltend mehrere artikulierte Module (71 bis 74; 91 bis 93) nach einem der vorhergehenden Ansprüche, wobei eines der beweglichen Elemente (78, 79, 80; 98, 99) der Module zwei benachbarten Modulen gemeinsam ist.

5. Gelenk nach Anspruch 4, **dadurch gekennzeichnet, dass** in einer besonderen Position des Gelenks (65, 66), die Achsen (18) der ersten Druckzylinder (71a bis 74a; 91a bis 93a) eines jeden der Module (71 bis 74; 91 bis 93) parallel sind.

6. Gelenk nach Anspruch 5, betrachtet in Abhängigkeit von Anspruch 2, **dadurch gekennzeichnet, dass** in einer besonderen Position des Gelenks (65), die Achsen der zweiten Druckzylinder (71b bis 74b) eines jeden der Module (71 bis 74) parallel sind.

7. Gelenk nach Anspruch 5, **dadurch gekennzeichnet, dass** die Module (91 bis 93) jeweils nur einen einzigen Druckzylinder (91a bis 93a) besitzen, dadurch, dass bei jedem Modul (91 bis 93), der Körper des Druckzylinders (91a bis 93a) mit jedem der beiden Elemente (97, 100) mit Hilfe einer Schwenkverbindung (102) verbunden ist, und dadurch, dass eine selbe gemeinsame Schwenkverbindung (102) ein gemeinsames bewegliches Modul (98) mit zwei benachbarten Modulen (91, 92) verbindet, und die Körper der Druckzylinder (91a, 92a) der beiden benachbarten Module (91, 92) verbindet.

8. Gelenk nach einem der Ansprüche 5 oder 7, **dadurch gekennzeichnet, dass** die Module (91 bis 93) jeweils nur einen einzigen Druckzylinder (91a bis 93a) besitzen, dadurch, dass bei jedem Modul (91 bis 93) die Zugstangen (91b bis 93b; 91c bis 93c) mit den entsprechenden Elementen (97 bis 100) mit Hilfe einer Schwenkverbindung (103) verbunden sind, und dadurch, dass eine selbe gemeinsame Schwenkverbindung (103) ein gemeinsames bewegliches Modul (98) mit zwei benachbarten Modulen (91, 92) verbindet, und die entsprechenden Zugstangen (91c, 92b) verbindet.

9. Gelenk (65, 66) nach einem der Ansprüche 4 bis 8, **dadurch gekennzeichnet, dass** es zudem gemeinsame Steuerungsmittel der ersten Druckzylinder (71a bis 74a; 91a bis 93a) der unterschiedlichen Module (71 bis 74; 91 bis 93) beinhaltet.

10. Gelenk (65) nach einem der Ansprüche 4 bis 9, betrachtet in Abhängigkeit von Anspruch 2, **dadurch gekennzeichnet, dass** es zudem gemeinsame Steuerungsmittel der zweiten Druckzylinder (71b bis 74b) der unterschiedlichen Module (71 bis 74) beinhaltet.

11. Exoskelett, beinhaltend zwei Gelenke (65) nach einem der Ansprüche 4 bis 10, betrachtet in Abhängigkeit von Anspruch 2, dazu bestimmt, jede Bewegung einer Hüfte einer Person (61) zu begleiten und zwei Gelenke (66) nach einem der Ansprüche 4 bis 10, dazu bestimmt, jede Bewegung eines Knies der Person (61) zu begleiten.

## Claims

1. A motorised articulated module (10; 71 to 74; 91 to 93) comprising two movable elements (11, 12; 77 to 81; 97 to 100), able to move in relation to each other, comprising:
• a first linear actuator (15; 71a to 74a; 91a to 93a) allowing the module to be motorised and comprising a body (16) and a rod (17) capable of translationally moving relative to the body (16) along an axis (18), the body (16) of the first actuator being connected to each of the two elements by means of a link (21, 22; 102) having at least one degree of rotational freedom;
• two link rods (24, 25; 91b, 91c, 92b, 92c, 93b, 93c) associated with the first actuator, each link rod being connected at a first (27, 29) one of their ends to the rod (17) of the first actuator by means of a link (30) having one degree of rotational freedom, a second end (26) of a first (24) one of the two link rods being connected to the first one (11; 98) of the two elements by means of a link (31; 103) having at least one degree of rotational freedom, a second end (28) of a second (25) one of the two link rods being connected to the second one (12) of the two elements by means of a link (32) having at least one degree of rotational freedom.

2. The articulated module as claimed in claim 1, **characterised in that** it further comprises:
• a second linear actuator (35) allowing the module to be motorised and comprising a body (36) and a rod (37) capable of translationally moving relative to the body along an axis (38), the axis of the second actuator (35) being distinct from the axis (18) of the first actuator (15), the body (36) of the second actuator (35) being rigidly connected to the body (16) of the first actuator (15), the bodies (16, 36) of the two actuators (15, 35) being connected to each of the two elements (11, 12) by means of a link (21, 22) having at least two degrees of rotational freedom;
• two link rods (44, 45) associated with the second actuator (35), each link rod being connected at a first (47, 49) one of their ends to the rod (37) of the second actuator (35) by means of a link (50) having one degree of rotational freedom, a second end (46) of a first (44) one of the two link rods being connected to the first one (11) of the two elements by means of a link (51) having two degrees of rotational freedom, a second end (48) of a second (45) one of the two link rods being connected to the second one (12) of the two elements by means of a link (52) having two degrees of rotational freedom,
**in that** the second end (26) of the first link rod (24) associated with the first actuator (15) is connected to the first one (11) of the two elements by means of a link (31) having at least two degrees of rotational freedom,
and **in that** the second end (28) of the second link rod (25) associated with the first actuator (15) is connected to the second one (12) of the two elements by means of a link (32) having at least two degrees of rotational freedom.

3. The articulated module as claimed in any one of the preceding claims, **characterised in that** the link rods (24, 25; 91b, 91c, 92b, 92c, 93b, 93c) are articulated relative to the rod (17, 37) of their respective actuator (15, 35; 71a to 74a; 91a to 93a) by means of the same pivot link (30, 50).

4. An articulation (65, 66) comprising a plurality of articulated modules (71 to 74; 91 to 93) as claimed in any one of the preceding claims, with one of said movable elements (78, 79, 80; 98, 99) of said modules being shared by two adjacent modules.

5. The articulation as claimed in claim 4, **characterised in that**, in a particular position of the articulation (65, 66), the axes (18) of the first actuators (71a to 74a; 91a to 93a) of each of the modules (71 to 74; 91 to 93) are parallel.

6. The articulation as claimed in claim 5 as a claim dependent on claim 2, **characterised in that**, in a particular position of the articulation (65), the axes of the second actuators (71b to 74b) of each of the modules (71 to 74) are parallel.

7. The articulation as claimed in claim 5, **characterised in that** the modules (91 to 93) each have only one actuator (91a to 93a), **in that**, for each module (91 to 93), the body of the actuator (91a to 93a) is connected to each of the two elements (97, 100) by means of a pivot link (102), and **in that** the same shared pivot link (102) connects a shared movable element (98) to two adjacent modules (91, 92) and the bodies of the actuators (91a, 92a) of the two adjacent modules (91, 92).

8. The articulation as claimed in any one of claims 5 or 7, **characterised in that** the modules (91 to 93) each have only one actuator (91a to 93a), **in that**, in each module (91 to 93), the link rods (91b to 93b, 91c to 93c) are connected to the corresponding elements (97 to 100) by means of a pivot link (103), and **in that** the same shared pivot link (103) connects a shared mobile element (98) to two adjacent modules (91, 92) and the corresponding link rods (91c, 92b).

9. The articulation (65, 66) as claimed in any one of claims 4 to 8, **characterised in that** it further comprises shared control means for the first actuators (71a to 74a; 91a to 93a) of the various modules (71 to 74; 91 to 93).

10. The articulation (65) as claimed in any one of claims 4 to 9 as a claim dependent on claim 2, **characterised in that** it further comprises shared control means for the second actuators (71b to 74b) of the various modules (71 to 74).

11. An exoskeleton comprising two articulations (65) as claimed in any one of claims 4 to 10 as a claim dependent on claim 2, which articulations are each intended to follow the movements of a hip of a person (61), and two articulations (66) as claimed in any one of claims 4 to 10, which articulations are each intended to follow the movements of a knee of the person (61).
